# EUROPÄISCHE PATENTSCHRIFT

(11) **EP 3 006 377 B1**
(45) Veröffentlichungstag und Bekanntmachung des Hinweises auf die Patenterteilung: **19.07.2017**
(21) Anmeldenummer: 15188398.0
(22) Anmeldetag: 05.10.2015
(51) Int. Cl.: B65G 1/07

(54) **TRANSPORTMITTEL SOWIE TRANSPORT- UND VERTEILERSYSTEM**
TRANSPORT MEANS AND TRANSPORT AND DISTRIBUTION SYSTEM
MOYEN DE TRANSPORT ET SYSTEME DE DISTRIBUTION ET DE TRANSPORT

(30) Priorität: 07.10.2014 DE 202014104805 U
(43) Veröffentlichungstag der Anmeldung: 13.04.2016
(73) Patentinhaber: Schoeller Allibert GmbH, 19057 Schwerin (DE)
(72) Erfinder: HUIZINGH, John, 9541 AH Vlagtwedde (NL)
(74) Vertreter: Winter, Brandl, Fürniss, Hübner, Röss, Kaiser, Polte - Partnerschaft mbB

(56) Entgegenhaltungen:
- EP-A2- 2 955 121
- EP-B1- 2 349 882
- FR-A1- 2 706 732

## Beschreibung

### Technisches Gebiet

Die vorliegende Erfindung bezieht sich auf ein Transportmittel gemäß dem Oberbegriff des Anspruchs 1, insbesondere auf einen flachen Behälter oder ein Tablar, das dafür geeignet ist, Güter, insbesondere Brief- oder Paketsendungen, im Rahmen eines Transport- und Verteilersystems mittels Förderbändern und / oder Rollenförderer zu transportieren.

Des Weiteren bezieht sich die Erfindung auf ein entsprechendes Transport- und Verteilersystem.

### Stand der Technik

In Postverteilzentren, Zustellservicebetrieben, Versandhäusern oder anderen Warenumschlags- oder Logistikzentren werden Güter oder Waren meist mittels Transport- und Verteilersystemen transportiert und an Weichen oder Ausschleusungsstationen entsprechend verteilt. Dabei werden die Güter in der Regel nicht unmittelbar auf den Förderbändern, Rollenförderern, Rutschen oder anderen Fördermittel, sondern auf Transportmittel, wie flache Behälter, Schalen oder Tablare platziert, um zu verhindern, dass die Ware verschmutzt oder gar beschädigt wird oder dass die Ware an einer Übergabestelle zwischen zwei Fördersystemen oder einer Weiche hängen bleibt oder herunterfällt. Diese Tablare dienen ferner dazu, Waren in verschiedenen Größen und Verpackungsarten in einem Lagersystem, Lager- oder Warenhaus ein- und auszuschleusen, welches über ein hohe Automatisierung verfügt. Damit die Waren auf den Rollbändern, Gurtförderer etc. transportiert werden können, werden diese auf einheitliche Tablare gestellt.

Es sind unterschiedliche gattungsgemäße Transportmittel in Form von Tablaren bekannt, die derart ausgestaltet sind, dass ein Transportgut, welches mittels eines solchen Transportmittels transportiert wird, während des Transports durch eine Seitenwandung oder einen Rahmen auf dem Transportmittel gehalten oder gesichert wird. Zur Auslieferung der Ware muss das Transportgut an bestimmten Punkten von dem Tablar entnommen werden. Dabei muss dieser Rahmen auf die eine oder andere Weise überwunden werden, um das Transportgut vom Transportmittel zu trennen beziehungsweise um das Transportgut dem Transportmittel zu entnehmen.

Beispielsweise werden in DE 10 2008 011 537 A1 und DE 10 2008 026 326 B4 Transportmittel beschrieben, die jeweils im Wesentlichen aus zwei lose miteinander verbundenen Teilen bestehen, nämlich einer rechteckförmigen Bodenplatte und einem entsprechenden rechteckförmigen Rahmen, in dem die Bodenplatte eingelegt ist. Die Bodenplatte kann frei zwischen einer unteren Position und einer oberen Position bewegt werden. In der unteren Position ist der Raum unmittelbar oberhalb der Bodenplatte seitlich vom Rahmen begrenzt. In der oberen Position hingegen ist der Raum unmittelbar oberhalb der Bodenplatte seitlich nicht vom Rahmen begrenzt. Wird ein Transportgut mit einem entsprechenden Transportmittel transportiert, wird dafür gesorgt, dass sich die Bodenplatte relativ zum Rahmen in der unteren Position befindet. Soll das Transportgut nach Beendigung des Transports dem Transportmittel entnommen werden, wird der Rahmen abgesenkt, wird die Bodenplatte angehoben oder werden sowohl der Rahmen abgesenkt und die Bodenplatte angehoben. Befindet sich somit die Bodenplatte relativ zum Rahmen in der oberen Position, kann das Transportgut seitlich vom Transportmittel geschoben werden.

Das Dokument EP 2 349 882 B1 offenbart ein Transportmittel gemäß dem Oberbegriff des Anspruchs 1, sowie ein Transport- und Verteilersystem nach dem Oberbegriff des Anspruchs 9. In EP 1 462 393 B1 wird ein Transportmittel offenbart, das ebenfalls eine durch einen Rahmen begrenzte Bodenplatte aufweist. Um die Entnahme eines Transportguts von solch einem Transportmittel zu erleichtern, zeichnet sich ein Transportmittel gemäß EP 1 462 393 B1 durch Öffnungen in der Bodenplatte aus. Durch diese Öffnungen können Hubmittel hindurch greifen, die somit das in dem Transportmittel befindliche Transportgut anheben und von dem Transportmittel trennen können.

Problem bisheriger gattungsgemäßer Transportmittel ist, dass ein Greifen und Herunterheben des Transportguts sehr aufwändig ist und das Anheben eines Tablarbodens relativ zum Rahmen über Hubmittel nur im Taktbetrieb möglich ist, was wiederum den Zeitaufwand erhöht.

### Offenbarung der Erfindung

Vor diesem Hintergrund besteht die Aufgabe der vorliegenden Erfindung darin, ein Transportmittel zu schaffen, welches die oben genannten Vorteile eines Tablars bietet und von dem ein Transportgut ohne Unterbrechung des Förderers seitlich geschoben werden kann. Ferner besteht die Aufgabe in der Bereitstellung eines entsprechend geeigneten Transport- oder Verteilersystems.

Diese Aufgabe wird hinsichtlich des Transportmittels durch Merkmale des Anspruchs 1 gelöst.

Ein erfindungsgemäßes Transport- und Verteilersystem ist Gegenstand des nebengeordneten Anspruchs.

Vorteilhafte Weiterbildungen sind Gegenstand der Unteransprüche.

Ein erfindungsgemäßes Transportmittel eignet sich zur Aufnahme von Gütern, wie Brief- oder Paketsendungen, um diese Güter im Rahmen eines Transport- oder Verteilersystems mittels Förderbändern und / oder Rollenförderer transportieren zu können. Dabei kann es sich um einen flachen Behälter oder ein Tablar handeln. Diese Transportmittel weist einen, insbesondere rechteckigen rahmen- oder wannenförmigen, Grundkörper auf, dessen Unterseite als Stellfläche auf einem Untergrund dient. Ferner weist es einen im Grundkörper senkrecht zur Stellfläche oder vertikal oder in Höhenrichtung beweglich aufgenommenes Bodenelement auf, dessen Oberseite als Ladungsfläche für die zu transportierenden Güter dient und das zwischen einer abgesenkten Position, in welcher die Ladungsfläche durch den Grundkörper seitlich begrenzt ist, und einer angehobenen Position, in welcher die Ladungsfläche durch den Grundkörper zumindest zu einer Seite hin nicht begrenzt ist, bewegbar ist. Erfindungsgemäß sind am Bodenelement Gleitabschnitte vorgesehen, die im Grundkörper entsprechend vorgesehene Durchbrüche durchgreifen, um mit stationär im Transport- oder Verteilersystem angeordneten Führungsabschnitten, insbesondere rampenförmigen Führungsschienen, zusammenwirken können und ein Überführen des Bodenelements aus der abgesenkten Position in die angehobene Position während Entlanggleitens der Gleitabschnitte an den Führungsabschnitten zu ermöglichen.

Das erfindungsgemäße Transportmittel ist somit so ausgebildet, dass es stationären, d.h. nicht betätigten oder nicht betätigbaren, Führungsabschnitten des Fördersystems während der Förderbewegung Zugriff auf entsprechende Abschnitte des Bodenelements ermöglichen, um dieses über die stationären Führungsabschnitten und durch die Förderbewegung für den Entladevorgang anheben und anschließend auch wieder absenken zu können.

Um diesen Zugriff auf das Bodenelement zu ermöglichen, weist der Grundkörper spezielle Durchbrüche auf. Diese sind derart ausgebildet, dass in einer Frontansicht bzw. auf der in Förderrichtung weisenden Seite das Projektionsflächenprofil des Bodenelements im Bereich der Gleitabschnitte, wenn sich das Bodenelement in der abgesenkten Position befindet, über das Projektionsflächenprofil des Grundkörpers hinausragt. Diese hinausragenden Gleitabschnitte bieten Angriffspunkte für die statischen Führungen des Fördersystems, so dass das Bodenelement mit Hilfe dieser Gleitabschnitte während der Förderbewegung senkrecht zur Förderrichtung und relativ zum Grundkörper betätigbar ist.

Das erfindungsgemäße Transportmittel bzw. Tablar ermöglicht so einen kontinuierlichen und taktfreien Betrieb des Fördersystems im Bereich von Transportweichen oder -abzweigungen in einem Verteilerzentrum, ohne dabei auf die Vorteile von bislang eingesetzten Tablaren verzichten zu müssen.

Gemäß einem Aspekt können die Gleitschnitte an zumindest zwei gegenüberliegenden ersten, insbesondere langen, Seitenkanten des Bodenelements als Vorsprünge ausgebildet sein, welche seitlich im Grundkörper vorgesehene Durchbrüche durchgreifen und aus diesen seitlich vorspringen. Indem die Vorsprünge seitlich herausragen, bieten diese über die gesamte Länge des Transportmittels Angriffsflächen für stationäre Führungs- oder Leitsysteme.

Das Zusammenspiel von Vorsprüngen an dem Bodenelement und Durchbrüchen an dem Grundkörper hat einen weiteren Vorteil. Über die Vorsprünge lässt sich das Bodenelement nicht nur von Außen manipulieren bzw. betätigen bzw. in Höhenrichtung verstellen, sondern diese stellen zugleich Führungselement dar. Über die Vorsprüngen und die Durchbrüche kann die vertikale Bewegung des Bodenelements definiert werden.

Gemäß einem alternativen Aspekt der Erfindung können die Gleitabschnitte an einer Unterseite des Bodenelements angeordnet sein und der Grundkörper an seiner Unterseite eine oder mehrere sich über die gesamte Länge des Grundkörpers erstreckende, insbesondere schlitzförmige, Ausnehmungen aufweisen, welche in Förderrichtung Zugriff auf die an der Unterseite des Bodens angeordneten Gleitabschnitte zulassen. Gemäß dieser Ausführung müssen die Gleitabschnitte nicht unbedingt aus dem Boden des Grundkörpers hervorragen, sondern müssen lediglich in einer Projektionsansicht des Grundkörpers hervorragen. Beispielsweise kann der Grundkörper an seiner Unterseite eine Art Längsnut oder Korridor aufweisen, um so einem stationären Führungselement von vorne Zugriff auf das Bodenelement zu ermöglichen.

Gemäß einem Aspekt kann das Bodenelement über Führungsvorsprünge vertikal im Grundkörper geführt sein, welche an zwei gegenüberliegenden zweiten, insbesondere kurzen, Seitenkanten des Bodens ausgebildet sind und in entsprechende Führungsausnehmungen oder -nuten im Grundkörper eingreifen. Dadurch kann die Funktion der vertikalen Führung auf die anderen beiden Seiten verlegt werden, falls das Zusammenspiel von Vorsprüngen und Durchbrüchen an den ersten Seitenkanten aufgrund von Kippbewegungen größeres Spiel bedarf.

Die Führungsvorsprünge können als Feder- oder Rastnasen ausgebildet sein, um das Bodenelement werkzeuglos in die Führungsausnehmungen oder -nuten einsetzen oder aus diesen entfernen zu können. Dadurch wird einerseits die vertikale Beweglichkeit des Bodenelements zum Grundkörper und andererseits eine Verliersicherung gewährleistet, so dass beim Hantieren nicht versehentlich das Bodenelement aus dem zugehörigen Grundkörper herausfällt.

Ferner kann der Grundkörper zumindest einen Anschlag aufweisen, welcher die Bewegung des Bodenelements in der angehobenen Position begrenzt.

Das Bodenelement kann in eine Bewegungsrichtung, insbesondere in Richtung der angehobenen Position, federvorgespannt sein. Dadurch wird zum Beispiel ein Klappern des Bodens beim Leertransport verhindert. Ferner kann es unter Umständen vorkommen, dass bei schweren Transportgütern das Anheben des Bodenelements über den Reibschluss zwischen Grundkörper und Förderband oder Förderrollen und den stationären Führungsschienen nicht ausreicht. Das durch Federn unterstützte Anheben kann ein Verkeilen des Transportmittels im Leitsystem verhindern.

Das Transportmittel kann auch auf einem baugleichen Transportmittel stapelbar sein und Vorsprünge und / oder Vertiefungen am Boden des Grundkörpers aufweisen, die bei einer Stapelung des Transportmittels auf einem baugleichen Transportmittel mit entsprechenden Vertiefungen und / oder Vorsprüngen an der Oberseite des baugleichen Transportmittels formschlüssig zusammenwirken können. Dies ermöglicht insbesondere eine platzsparende Lagerung oder Transport von leeren Transportmitteln.

Ein erfindungsgemäßes Transport- oder Verteilersystem für Güter weist zumindest einen Förderband- oder Rollenfördererabschnitt und ggf. eine seitliche Abzweigung, insbesondere zu einer weiteren Förderstrecke oder einer Ablagestation, auf. Insbesondere im Bereich der seitlichen Abzweigung ist unmittelbar über dem Förderband- oder Rollenfördererabschnitt ein Leitsystem mit einem stationär angeordneten Führungsabschnitt, der Führungsabschnitt zwei Führungsschienen aufweist, vorgesehen. Dieser Führungsabschnitt kann mit einem beweglich aufgenommenen Bodenelement eines auf dem Förderband- oder Rollenfördererabschnitt transportierten mehrteiligen Transportmittels zusammenwirken. Dabei weist der Führungsabschnitt zumindest einen zum Förderband- oder Rollenfördererabschnitt angestellten ersten Abschnitt auf, um während der Förderbewegung den Abstand des Bodenelements des Transportmittels relativ zum Förderband- oder Rollenfördererabschnitt zu verändern.

Erfindungsgemäß wird somit in einer kontinuierlichen Förder-Gleit/AbrollBewegung das anzuhebende oder abzusenkende Teil des Transportmittels betätigt, ohne die Förderbewegung stoppen, unterbrechen oder verändern zu müssen.

Gemäß einem Aspekt kann der Führungsabschnitt rampenförmig ausgebildet sein und den in Förderrichtung nach oben angestellten ersten Abschnitt sowie einen daran anschließenden sich parallel zum Förderband- oder Rollenfördererabschnitt erstreckenden zweiten Abschnitt aufweisen. Dadurch wird zunächst im ersten Abschnitt der Abstand von dem Förderband- oder Rollenfördererabschnitt kontinuierlich erhöht und anschließend im zweiten Abschnitt dieser Abstand bzw. diese Höhe über eine bestimmte Förderstrecke bzw. Zeitdauer beibehalten. Über die Fördergeschwindigkeit und die Förderstrecke kann die Zeitdauer eingestellt werden, über welche der Teil des Transportmittels in der angehobenen Position verbleiben soll.

Vorzugsweise schließt an den zweiten Abschnitt ein in Förderrichtung nach unten angestellter dritter Abschnitt an. Dadurch kann der angehobene Teil wieder in seine Ausgangsposition zurückgeführt werden.

Gemäß einem Aspekt kann der Führungsabschnitt eine rampenförmig ausgebildete untere Führungsschiene sein, welche mit dem anzuhebenden Bodenelement des Transportmittels zusammenwirkt. Ferner kann ein weiterer Führungsabschnitt vorgesehen sein, der parallel zum Förderband- oder Rollenfördererabschnitt ausgebildet ist und ein Anheben des nicht anzuhebenden Teils des Transportmittels verhindert. Dadurch erhöht sich die Funktionssicherheit des erfindungsgemäßen Führungsabschnitts noch weiter.

Es ist vorteilhaft, wenn der Förderband- oder Rollenfördererabschnitt im Bereich der seitlichen Abzweigung tiefer, insbesondere um die Höhe des Transportmittels tiefer, als die seitliche Abzweigung angeordnet ist. Dadurch erleichtert sich der Weitertransport des Transportguts, ohne dieses anheben zu müssen.

### Kurzbeschreibung der Zeichnungen

Die vorliegende Erfindung wird im Folgenden anhand bevorzugter Ausführungsbeispiele unter Bezugnahme auf die beigefügten Zeichnungen näher beschrieben. Es zeigen:
Fig. 1 eine perspektivische Ansicht eines erfindungsgemäßen Transportmittels;
Fig. 2 eine perspektivische Ansicht des in Fig. 1 gezeigten Transportmittels von unten;
Fig. 3 eine perspektivische Ansicht eines Grundkörpers des erfindungsgemäßen Transportmittels;
Fig. 4 eine perspektivische Ansicht des in Fig. 3 gezeigten Grundkörpers von unten;
Fig. 5 eine perspektivische Ansicht eines Bodenelements des erfindungsgemäßen Transportmittels;
Fig. 6 eine perspektivische Ansicht des in Fig. 5 gezeigten Bodenelements von unten;
Fig. 7 eine perspektivische Ansicht eines erfindungsgemäßen Transportsystems, bei dem sich der Boden in einer ersten Lage befindet;
Fig.8 eine perspektivische Ansicht des in Fig. 7 gezeigten Transportsystems, bei dem sich das Bodenelement zwischen der ersten Lage und einer zweiten Lage befindet;
Fig. 9 eine teilweise durchbrochene, perspektivische Ansicht des in Fig. 8 gezeigten Transportsystems; und
Fig. 10 eine perspektivische Ansicht des in Fig. 7 gezeigten Transportsystems, bei dem sich das Bodenelement in der zweiten Lage befindet;
Fig. 11 eine teilweise durchbrochene, perspektivische Ansicht des in Fig. 10 gezeigten Transportsystems.

### Detaillierte Beschreibung bevorzugter Ausführungsformen

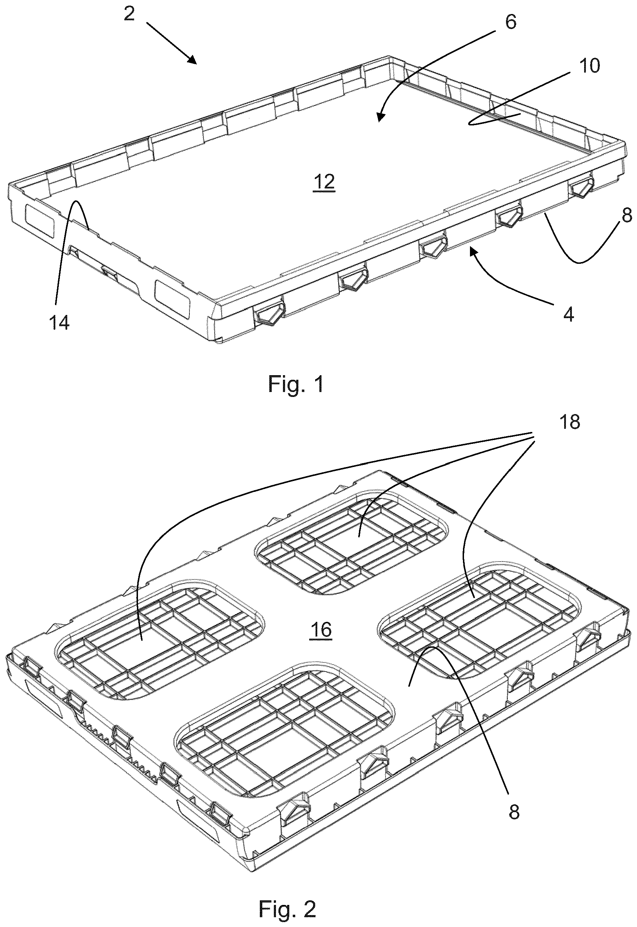

Figuren 1 und 2 zeigen eine perspektivische Drauf- bzw. Unteransicht eines erfindungsgemäßen Transportmittels 2 in Form eines Tablars gemäß einer bevorzugten Ausführungsform der Erfindung. Das Transportmittel 2 weist einen rahmen- oder wannenförmigen Grundkörper 4 sowie ein separat dazu ausgebildetes Bodenelement 6 auf. Der einstückige Grundkörper 4 und das einstückige Bodenelement 6 sind jeweils aus Kunststoff, insbesondere aus einem Polymer, im Spritzgießverfahren gefertigt. Das Bodenelement 6 ist vertikal bzw. in Höhenrichtung beweglich im bzw. innerhalb des Grundkörpers 4 aufgenommen, so dass das Bodenelement 6 relativ zum Grundkörper 4 und umgekehrt beweglich ist. Der Grundkörper 4 und das Bodenelement 6 haben jeweils einen im Wesentlichen rechteckförmigen Grundriss und sind insgesamt flach ausgebildet. Der Grundkörper 4 weist einen Grundkörperboden 8 und eine sich im Wesentlichen senkrecht dazu erstreckende Umwandung 10 auf, weshalb die Höhe des Grundkörpers 4 größer als die Höhe des Bodens 6 ist.

Das Bodenelement 6 weist auf seiner flachen und seinerseits seitlich nicht begrenzten Oberseite eine Ladungsfläche 12 zur Aufnahme eines Transportgutes G auf. Wenn sich das Bodenelement 6 in der in der Fig. 1 dargestellten unteren bzw. abgesenkten Position befindet, befindet sich die Ladungsfläche 12 innerhalb der Umwandung 10 des Grundkörpers 4 und wird somit durch diese seitlich begrenzt. Anders ausgedrückt befindet sich die Ladungsfläche 12 unterhalb einer Oberkante 14 der Umwandung 10, wenn sich das Bodenelement 6 in der abgesenkten Position befindet. Wie weiter unten detailliert beschrieben wird, kann das Bodenelement 6 und damit die Ladungsfläche 12 relativ zum Grundkörper 4 angehoben werden bzw. in eine obere bzw. angehobene Position gebracht werden, in welcher sich die Ladungsfläche 12 auf der Höhe oder über der Oberkante 14 der Umwandung 10 befindet. In der angehobenen Position wird die Ladungsfläche 12 seitlich nicht mehr durch die Umwandung 10 begrenzt, so dass ein oder mehrere auf die Ladungsfläche 12 platzierte Güter G seitlich von der Ladungsfläche 12 bzw. vom Transportmittel 2 rutschen bzw. gerutscht werden können.

Der Grundkörperboden 8 weist an seiner Unterseite eine Stellfläche 16 für den Grundkörper 4 bzw. das Transportmittel 2 insgesamt auf, mit welcher das Transportmittel 2 auf einen Untergrund oder auf ein Förderband oder Rollen eines Förderers gestellt werden kann.

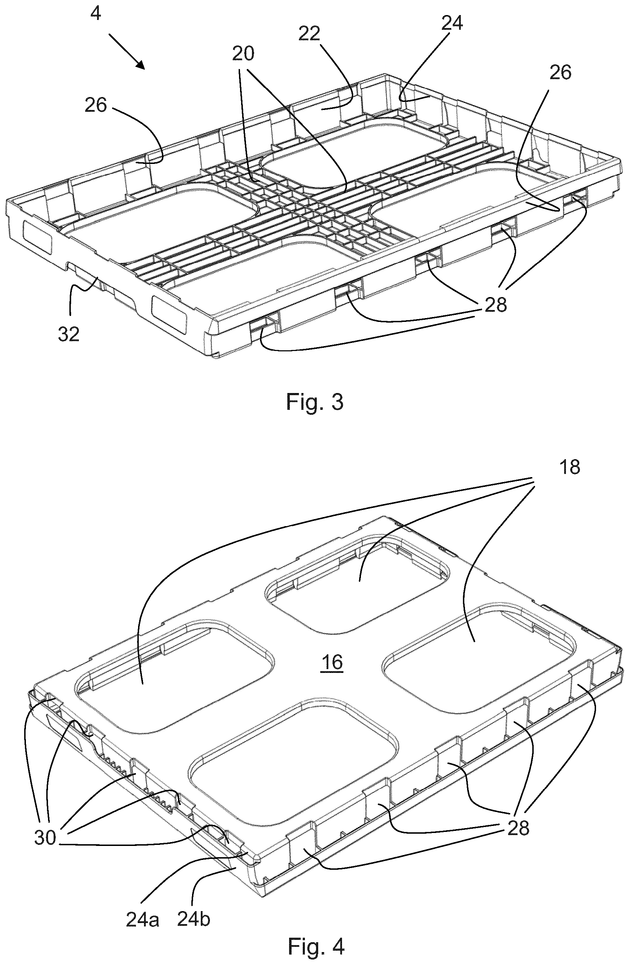

Die Figuren 3 und 4 zeigen eine perspektivische Drauf- bzw. Unteransicht des Grundkörpers 4. Der Grundkörper 6 weist die Umwandung 10, welche einen im Wesentlichen rechteckförmigen Rahmen bildet, und den im Wesentlichen kreuzförmigen oder gitterförmigen Grundkörperboden 8 auf, welcher zur Gewichtsreduzierung vier große Aussparungen 18 aufweist. Die restlichen Abschnitte des Grundkörperbodens 8 weisen auf der Oberseite bzw. auf der der Stellfläche 18 gegenüberliegenden Seite gitterförmig angeordnete Verstärkungsrippen 20 auf. Die Unterseite des Grundkörperbodens 8 bzw. die Stellfläche 16 ist dagegen glatt ausgebildet.

Die Umwandung 10 besteht im Wesentlichen aus zwei einander gegenüberliegenden langen Seitenrändern oder -wänden 22 und zwei einander gegenüberliegenden kurzen Seitenrändern oder -wänden 24. Die langen und kurzen Seitenwände 22 und 24 sind im Wesentlichen gleich hoch.

Die langen Seitenwände 22 weisen einen seitlich nach außen vorragenden bzw. überhängenden oberen Rand 26 auf, der von der Oberkante 14 seitlich nach unten gezogen ist. Die langen Seitenwände 20 weisen eine Vielzahl an über die Länge gleichmäßig verteilten Durchbrüche 28 auf, die von der Oberkante 14 bis in den Grundkörperboden 8 hineinreichen und seitlich lediglich durch den Rand 26 überdeckt werden.

Die kurzen Seitenwände 24 sind größtenteils doppelwandig ausgebildet, wobei die innere Wandung 24a der kurzen Seitenwände 24 ebenfalls eine Vielzahl an über die Länge gleichmäßig verteilte Durchbrüche 30 aufweisen, wobei die Durchbrüchen 30 auf den kurzen Seiten nicht ganz bis zur Oberkante 14 reichen. Ein mittig etwas zurückgenommener bzw. nicht ganz bis zum Grundkörperboden 8 reichender Abschnitt einer äußeren Wandung 24b der kurzen Seitenwände 24 bildet einen Griffabschnitt 32 zum Tragen bzw. Hantieren des Transportmittels 2.

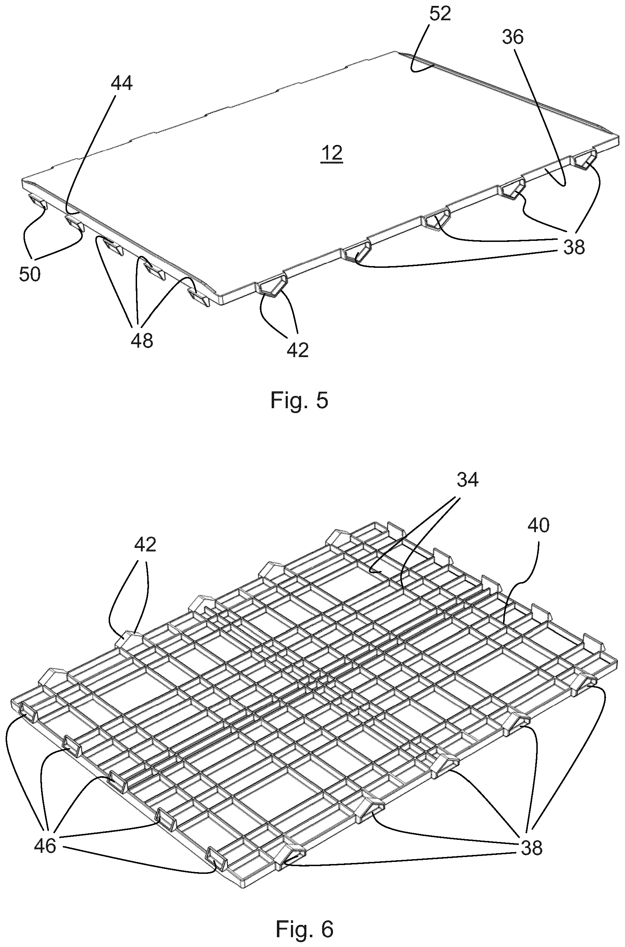

Die Figuren 5 und 6 zeigen eine perspektivische Drauf- bzw. Unteransicht des Bodenelements 6. Das Bodenelement 6 ist im Wesentlichen als flaches, rechteckförmiges Plattenelement ausgeformt mit einer glatten Oberseite, welche die Stellfläche 16 darstellt, und einer Vielzahl an gitterförmig angeordneten Verstärkungsrippen 34 an der Unterseite.

An langen Seitenkanten 36 des Bodenelements 6 sind eine Vielzahl an über die Länge gleichmäßig verteilte Vorsprünge 38 vorgesehen, die hinsichtlich Anzahl, Ort und Breite an die in den langen Seitenwänden 22 vorgesehenen Durchbrüche 28 derart angepasst sind, dass, wenn das Bodenelement 6 in den Grundkörper 4 von oben eingesetzt werden, die Vorsprünge 38 in die Durchbrüche 28 eingreifen bzw. die langen Seitenwände 22 durchgreifen.

Die Vorsprünge 38 schließen bündig mit der Ladungsfläche 12 ab. An der Unterseite dagegen ragen die Vorsprünge 38 über eine durch die Verstärkungsrippen 34 definierte Auflagefläche 40 hinaus. Die über die Auflagefläche 40 hinausragenden Abschnitte 42 jedes Vorsprungs 38 sind in Richtung der Seitenkanten 36 zu beiden Seiten bzw. in beide Richtungen angestellt bzw. geneigt. Anders ausgedrückt laufen die Vorsprünge 38 nach unten, d.h. in einer von der Ladungsfläche 12 abgewandten Richtung, zu einem flachwinkligen Spitz zu. Die Unterseite eines jeden ersten Vorsprungs 38 besitzt also im Wesentlichen die Form eines umgedrehten Satteldachs.

An kurzen Seitenkanten 44 des Bodenelements 6 sind eine Vielzahl an über die Länge gleichmäßig verteilte Vorsprünge 46 vorgesehen, die hinsichtlich Anzahl, Ort und Breite an die in den kurzen Seitenwänden 24 vorgesehenen Durchbrüche 30 derart angepasst sind, dass, wenn das Bodenelement 6 in den Grundkörper 4 von oben eingesetzt werden, die Vorsprünge 46 in die Durchbrüche 30 eingreifen bzw. die innere Wandung 24a der kurzen Seitenwände 24 durchgreifen.

Jeder dieser Vorsprünge 46 ist im Wesentlichen keilförmig, wobei die Spitze des Keils nach unten gerichtet ist. Die geneigte Fläche eines jeden Vorsprungs 46 ist jeweils an der von der Ladungsfläche 12 weg weisenden Seite angeordnet. Im Gegensatz zu den langen Seiten sind auf den kurzen Seiten die Vorsprünge 46 lediglich an der Unterseite der Seitenkanten 44 vorgesehen und ragen seitlich und nach unten über die Auflagefläche 40 hinaus. Die Vorsprünge 46 sind als eine Art Federzungen mit einer Rastkante 48 und einem von dort nach unten und innen angestellten Abschnitt 50 ausgebildet. Wenn das Bodenelement 6 in den Grundkörper 4 von oben eingesetzt wird, verdrängt ein Abschnitt der inneren Seitenwand 24a, der die Durchbrüche 30 nach oben hin begrenzt, den Abschnitt 50 samt Rastkante 48 elastisch nach innen, bis die Rastkante 48 des jeweiligen Vorsprungs 46 in den entsprechenden Durchbruch 30 einrastet. Im Weiteren ist das Bodenelement 6 frei beweglich, bis die Unterseite bzw. Auflagefläche 40 des Bodenelements 6 in Kontakt mit der Oberseite bzw. den Verstärkungsrippen 20 des Grundkörpers 4 gelangt.

Wenn das Bodenelement 6 schwerkraftbedingt auf dem Grundkörperboden 8 aufliegt, befindet sich das Bodenelement 6 in einer unteren bzw. abgesengten Position. Das Bodenelement 6 kann soweit angehoben werden, bis die Rastkanten 48 der Vorsprünge 46 an den kurzen Seiten an den oberen Kanten der Durchbrüche 30 anschlagen. Das Zusammenspiel von den Vorsprüngen 46 samt Rastkante 48 und den Durchbrüchen 30 begrenzt somit den Bewegungsfreiheitsgrad des Bodenelements 6 nach oben. Um das Bodenelement 6 nach oben aus dem Grundkörper 4 wieder herausnehmen zu können, müssen lediglich die Federzungen oder federelastischen Vorsprünge 46 nach innen gedrückt werden, um so die Rastkanten 48 außer Eingriff mit den Durchbrüchen 30 zu bringen. Auf diese Weise ist das Bodenelement 6 werkzeuglos mit dem Grundkörper montier bzw. verbindbar und von diesem wieder demontierbar bzw. lösbar.

Wie in der Fig. 5 zu erkennen ist, ist auf der Oberseite des Bodenelements 6 an den kurzen Seiten jeweils eine kleine Kante 52 oder eine von der Ladungsfläche 12 aus vorspringende Rippe vorgesehen, die eine Rutschsicherung für das auf die Ladungsfläche 12 gestellte Transportgut darstellt. An den langen Seiten ist dagegen keinerlei Seitenbegrenzung vorgesehen.

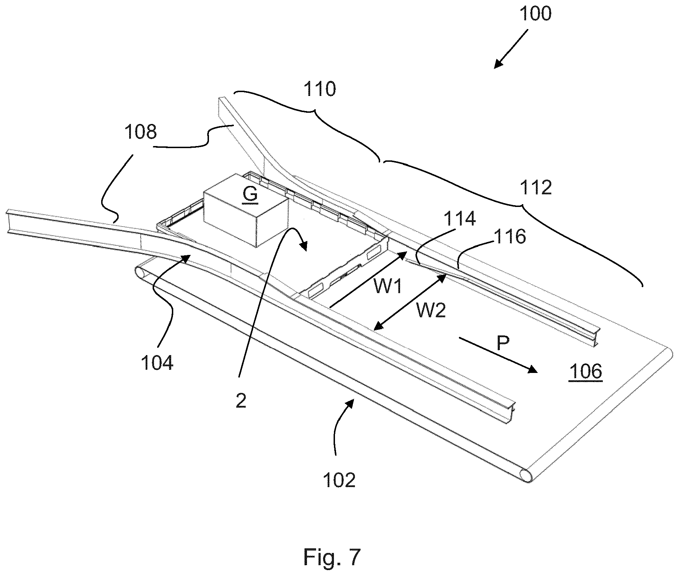

In Verbindung mit den Figuren 7 bis 11 werden ein erfindungsgemäßer Abschnitt 100 eines Fördersystems sowie die Verwendung des erfindungsgemäßen Transportmittels 2 mit einem solchen Fördersystemabschnitt 100 beschrieben.

Fig. 7 zeigt eine schematische, perspektivische Ansicht des erfindungsgemäßen Fördersystemabschnitts 100, der einen Förderbandabschnitt 102 und ein statisches Leitsystem 104 aufweist. Der Förderbandabschnitt 102 weist ein in Pfeilrichtung P angetriebenes Förderband 106 auf, auf welchem das erfindungsgemäße Transportmittel 2 gefördert bzw. transportiert wird. Unmittelbar über dem Förderbandabschnitt 102 befindet sich das Leitsystem 104, das im Wesentlichen zwei statische oder stationäre Leitschienen 108 mit einem Zentrierabschnitt 110 und einen Anhebeabschnitt 112 aufweist.

Im Bereich des Zentrierabschnitts 110 fungieren die Leitschienen 108 als eine Art Leitplanken. Dabei verringert sich der Abstand der beiden Leitschienen 108 zueinander zunehmend, bis auf etwa die Breite des Transportmittels 2. Dadurch wird das ankommende Transportmittel 2 bzw. der ankommende Tablar mit dem darauf befindlichen Transportgut G zentriert und in Längs- bzw. Förderrichtung ausgerichtet.

Im darauffolgenden Anhebeabschnitt 112 sind die Leitschienen 108 jeweils mit einer unteren Führungskante 114 und einer obere Führungskante 116 versehen, welche von den Leitschienen 108 jeweils nach innen, d.h. zum Transportmittel 2 hin, ragen und sich über eine bestimmte Länge in Förderrichtung erstrecken.

Die untere Führungskante 114 weist in Förderrichtung einen zunächst gegenüber dem Förderband 106 leicht nach oben angestellten ersten Führungsabschnitt 118 auf. Der Anfang der unteren Führungskante 114 befindet sich unmittelbar oberhalb des Förderbands 106. Von dort an steigt die untere Führungskante 114 leicht an und geht anschließend in einen parallel zum Förderband 106 verlaufenden zweiten Führungsabschnitt 120 über. Nach einer bestimmten Länge kann die Führungskante 114 in einen leicht nach unten angestellten (nicht dargestellten) dritten Führungsabschnitt übergehen, der den entsprechenden nur umgekehrten Verlauf wie der erste Führungsabschnitt 118 aufweist.

Der Abstand der beiden Leitschienen 108 zueinander ist einstellbar. Vorzugsweise wird der Abstand der Leitschienen 108 derart eingestellt, dass in den Abschnitten 118 und 120 die lichte Weite W1 der Innenkanten der unteren Führungskanten 114 nur geringfügig größer als der Abstand zwischen den Außenseiten der gegenüberliegenden langen Seitenwände 22 ist und die lichte Weite W2 zwischen den Innenseiten der Leitschienen 108 nur geringfügig größer als der Abstand der Außenseiten der gegenüberliegenden oberen Rändern 26 ist. Mit anderen Worten, die oberen Ränder 26 gleiten an den Leitschienen 108 und die langen Seitenwände 24 gleiten an den Führungskanten 114 entlang.

Die obere Führungskante 116 verläuft parallel zum Förderband 106 und ragt unmittelbar über die entsprechende Längskante des Transportmittels 2 nach innen. Sie befindet sich unmittelbar oberhalb der Oberkante 14 der langen Seitenwände 22 des Grundkörpers 4. Der Grundkörper 4 gleitet mit seiner Oberkante 14 an der Unterseite der oberen Führungskante 116 entlang.

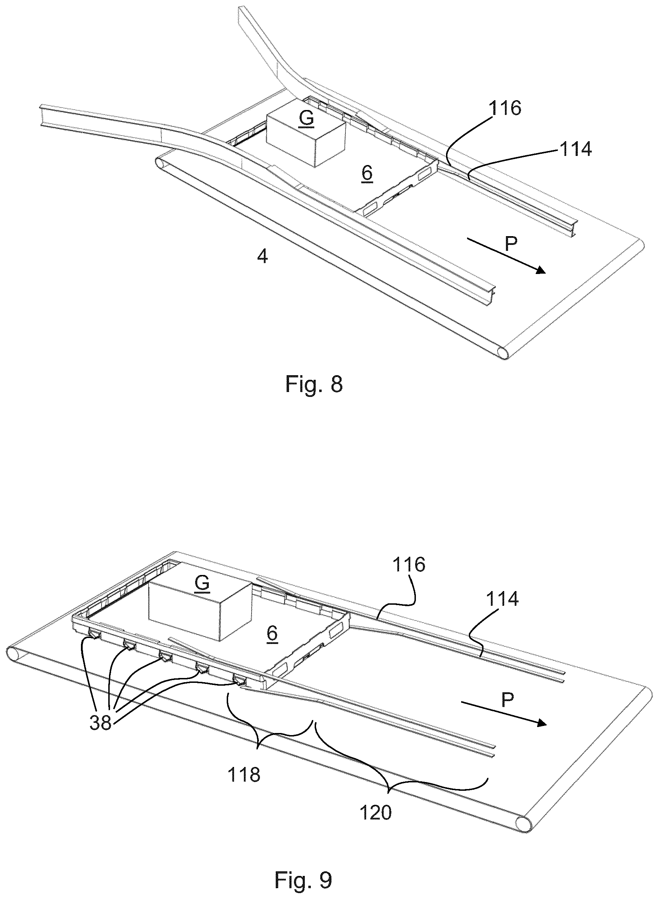

Aus den Figuren 1 und 2 ist erkennbar, dass die am Bodenelement 6 ausgebildeten Vorsprünge 38 die Durchbrüche 28 in den langen Seitenwänden 22 des Grundkörpers durchgreifen, d.h. über die langen Seitenwänden 22 seitlich vorragen. Somit ist die Weite der Vorsprünge 38 der gegenüberliegenden langen Seitenkanten 36 des Bodenelements 6 größer als die lichte Weite W1 der Innenkanten der unteren Führungskante 114. Wenn sich also das Transportmittel 2 mittels des Förderbands 106 zum Anhebeabschnitt (Fig. 8) weiterbewegt wird, kommen die in Förderrichtung vorauseilenden erste Vorsprünge 38 mit ihren angeschrägten Unterseiten 42 in Kontakt mit den Oberseiten der unteren Führungskanten 114. Wird das Transportmittel 2 weiter in Förderrichtung bewegt, gleiten die Vorsprünge 38 entlang der rampenförmig ausgebildeten unteren Führungskante 114 nach oben, wodurch das Bodenelement 6 samt Transportgut G zunehmend aus dem Grundkörper 4 angehoben wird, bis das Transportmittel 2 den zweiten Abschnitt 120 erreichen, wo die Höhe des Bodenelements 6 gehalten wird. Die obere Führungskante 116 stellt dabei sicher, dass der Grundkörper 4 nicht ebenfalls angehoben wird, indem sie von oben auf die Oberkante 14 des Grundkörpers 4 drückt. Anders ausgedrückt, der Grundkörper 4 ist zwischen dem Förderband 106 und der oberen Führungskante 116 gefangen, während sich das separate Bodenelement mit seiner geringeren Höhe dazwischen bewegen kann.

Der rampenförmige Verlauf der unteren Führungskanten 114 ist an den Freiheitsgrad des Bodenelements 6 innerhalb des Grundkörpers 4 derart angepasst, dass sich das Bodenelement 6 vor dem ersten Abschnitt 118 in der weiter oben beschriebenen abgesenkten Position befindet und nach dem ersten Abschnitt 118 bzw. im Bereich des zweiten Abschnitts 120 in der angehobenen Position befindet, in welcher die Ladungsfläche 12 des Bodenelements 6 auf gleicher Höhe wie die Oberkante 14 oder darüber liegt bzw. bündig mit der Oberseite der oberen Führungskante 116 abschließt. Hierzu kann es notwendig sein, dass die Randbereiche der Ladungsfläche 12, welche unter die oberen Führungskanten 116 eintauchen, gegenüber der restlichen Ladungsfläche 12 etwas abgesenkt sind.

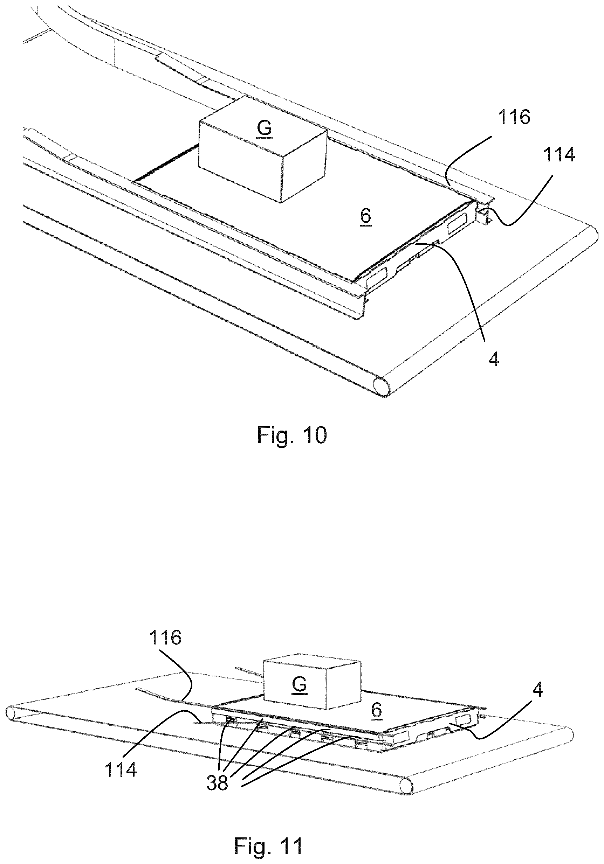

Während des normalen Transports befindet sich das Bodenelement 6 schwerkraftbedingt in der abgesenkten Position. In dieser Position ist das Transportgut G durch die Seitenwände 22 und 24 des Grundkörpers 4 gesichert. Gelangt das Transportmittel 2 in den erfindungsgemäßen Fördersystemabschnitt 100, wird im laufenden und kontinuierlichen Betrieb des Förderers das Bodenelement 6 relativ zum Grundkörper 4 angehoben. Befindet sich das Bodenelement 6 in der angehobenen Position (Fig. 10 und 11), kann das Transportgut G durch eine entsprechende und geeignete Einrichtung seitlich von dem Transportmittel 2 geschoben werden oder das Transportmittel 2, z.B. über das Leitsystem 104, leicht zur Seite gekippt werden, so dass das Transportgut G von alleine vom Transportmittel 2 rutscht, ohne das Förderband 106 dabei stoppen oder verlangsamen zu müssen.

Im darauffolgenden (nicht gezeigten) dritten Abschnitt des Leitsystems 104 kann das vom Transportgut G entledigte Bodenelement 6 wieder abgesenkt werden und das Transportmittel 2 den erfindungsgemäßen Fördersystemabschnitt 100 verlassen und wieder zum Ausgangpunkt oder ins Lager zurückgeführt werden.

Die in den Figuren 1 bis 6 gezeigte und oben beschriebene Ausführungsform des erfindungsgemäßen Transportmittels und die in den Figuren 7 bis 11 gezeigte und oben beschriebene Ausführungsform des erfindungsgemäßen Transportsystems stellen lediglich mögliche Umsetzungen der beanspruchten Erfindung dar.

Beim oben beschriebenen Transportmittel 2 unterscheiden sich die Vorsprünge 38 an den langen Seiten von den Vorsprüngen 46 an den kurzen Seiten in Form und Funktion. Alternativ können die Vorsprünge an allen Seiten gleich ausgebildet sein (z.B. wie die Vorsprünge 38 an den langen Seiten), um so das Transportmittel auch um 90° gedreht fördern zu können. Der obere Anschlag könnte durch die obere Führungskante des Leitsystems 104 realisiert werden.

Die Vorsprünge 38 könnten an ihren Unterseiten anstelle von angestellten Abschnitten 42, konvex ausgebildete oder abgerundete Abschnitte aufweisen.

Es ist auch denkbar, dass sich im Anhebeabschnitt das Förderband relativ zur unteren Führungskante absenkt.

Ferner kann das Bodenelement in eine Bewegungsrichtung federvorgespannt sein. Beispielsweise kann das Bodenelement nach oben federvorgespannt sein, um das Anheben des Transportguts zu erleichtern und gegebenenfalls ein Verklemmen oder Verkeilen des Transportmittels bei schweren Gütern in dem Leitschienensystem zu verhindern.

Bei der oben beschriebenen Ausführungsform wird das Bodenelement 6 auf beiden Seiten angehoben. Deshalb sind die Vorsprünge 38, über welche das Bodenelement 6 angehoben wird, an beiden Seitenkanten 36 ausgebildet und weist der Anhebeabschnitt 112 Fürhrungsschienen 114 und 116 auf beiden Seiten auf. Es jst jedoch auch denkbar, dass die Führungsschienen 114 und 116 nur auf einer Seite angeordnet sind, um nur eine Seite des Bodenelements 6 anzuheben und das Stückgut übe die Schräglage vom Transportmittel bzw. Tablar 2 zu schieben. Es können die Vorsprünge 36 auch nur einseitig vorgesehen sein.

Ferner kann die Anzahl der Vorsprünge 38 und 46 und die entsprechende Anzahl an Durchbrüchen 28 und 30 entsprechend den jeweiligen Anforderungen variiert werden.

Die am Bodenelement ausgebildeten Gleitabschnitte müssen nicht zwangläufig an der Unterseite von seitlich vorragenden Vorsprüngen angeordnet sein. Eine Ausführungsform, bei der sich zumindest ein Gleitabschnitt nur an der Unterseite des Bodenelements befindet, ist ebenfalls im Sinne der Erfindung, wenn an der Unterseite des Grundkörpers eine Aussparung vorgesehen, die sich entlang einer gesamten Länge des Grundkörpers erstreckt. Eine derart ausgeformte Aussparung ermöglicht den ununterbrochenen Zugriff einer stationären Führungsschiene auf das Bodenelement ohne dass die Führungsschiene die Bewegung des Grundkörpers beeinflusst. Somit kann auch ein derart ausgeformtes erfindungsgemäßes Transportmittel mithilfe eines bewegten Förderbandes entlang einer stillstehenden Führungsschiene kontinuierlich so bewegten werden, dass die Führungsschiene das Bodenelement anhebt und absenkt, ohne eine Unterbrechung der Förderbewegung zu erfordern.

### Bezugszeichenliste

- 2: Transportmittel
- 4: Grundkörper
- 6: Bodenelement
- 8: Grundkörperboden
- 10: Umwandung
- 12: Ladungsfläche
- 14: Oberkante
- 16: Stellfläche
- 18: Aussparung
- 20: Verstärkungsrippe
- 22: lange Seitenwand
- 24: kurze Seitenwand
- 26: Rand
- 28: Durchbruch
- 30: Durchbruch
- 32: Griffabschnitt
- 34: Verstärkungsrippe
- 36: lange Seitenkante
- 38: Vorsprung
- 40: Auflagefläche
- 42: geneigter Abschnitt
- 44: kurze Seitenkante
- 46: Vorsprung
- 48: Rastkante
- 50: keilförmiger Abschnitt
- 52: Kante

- 100: Fördersystemabschn itt
- 102: Förderbandabschnitt
- 104: Leitsystem
- 106: Förderband
- 108: Leitschiene
- 110: Zentrierabschnitt
- 112: Anhebeabschnitt
- 114: untere Führungskante
- 116: obere Führungskante
- 118: erster Führungsabschnitt
- 120: zweiter Führungsabschnitt

- G: Gut
- P: Förderrichtung
- W1: lichte Weite der unteren Führungskanten
- W2: lichte Weite der Leitschienen

## Patentansprüche

1. Transportmittel (2), insbesondere ein flacher Behälter oder Tablar, zur Aufnahme von Gütern (G), insbesondere von Brief- oder Paketsendungen, um diese Güter (G) im Rahmen eines Transport- oder Verteilersystems (100) mittels Förderbändern (106) und / oder Rollenförderer transportieren zu können, mit:
einem, insbesondere rechteckigen rahmen- oder wannenförmigen, Grundkörper (4), dessen Unterseite als Stellfläche (16) auf einem Untergrund dient, und
einem im Grundkörper (4) senkrecht zur Stellfläche (16) beweglich aufgenommenen Bodenelement (6), dessen Oberseite als Ladungsfläche (12) für die zu transportierenden Güter (G) dient und das zwischen einer abgesenkten Position, in welcher die Ladungsfläche (12) durch den Grundkörper (4) seitlich begrenzt ist, und einer angehobenen Position, in welcher die Ladungsfläche (12) durch den Grundkörper (4) zumindest zu einer Seite hin nicht begrenzt ist, bewegbar ist,
**dadurch gekennzeichnet, dass**
zumindest ein am Bodenelement (6) vorgesehener Gleitabschnitt (42) zumindest einen im Grundkörper (4) entsprechend vorgesehenen Durchbruch (28) durchgreift, um mit zumindest einen stationär im Transport- oder Verteilersystem angeordneten Führungsabschnitt (118, 120), insbesondere zumindest einer rampenförmigen Führungsschiene (114), zusammenwirken können und ein Überführen des Bodenelements (6) aus der abgesenkten Position in die angehobene Position während Entlanggleitens des zumindest einen Gleitabschnitts (42) an dem zumindest einen Führungsabschnitt (118, 120) zu ermöglichen.

2. Transportmittel (2) nach Anspruch 1, **dadurch gekennzeichnet, dass** der zumindest eine Gleitschnitt (42) an zumindest einer, insbesondere an zwei gegenüberliegenden, ersten, insbesondere langen, Seitenkante (36) des Bodenelements (6) als Vorsprung (38) ausgebildet ist, welcher zumindest einen seitlich im Grundkörper (4) vorgesehenenDurchbruch (28) durchgreift und aus diesem seitlich vorspringt.

3. Transportmittel (2) nach Anspruch 1, **dadurch gekennzeichnet, dass** der zumindest eine Gleitabschnitt an einer Unterseite des Bodenelements (6) angeordnet ist und der Grundkörper (4) an der Unterseite zumindest eine sich über die gesamte Länge des Grundkörpers (4) erstreckende, insbesondere schlitzförmige, Ausnehmung aufweist, welche in Förderrichtung Zugriff auf den zumindest einen an der Unterseite des Bodens angeordneten Gleitabschnitt zulässt.

4. Transportmittel (2) nach einem der Ansprüche 1 bis 3, **dadurch gekennzeichnet, dass** das Bodenelement (6) über Führungsvorsprünge (46) vertikal im Grundkörper (4) geführt ist, welche an zwei gegenüberliegenden zweiten, insbesondere kurzen, Seitenkanten (44) des Bodenelements (6) ausgebildet sind und in entsprechende Führungsausnehmungen oder -nuten (30) im Grundkörper (4) eingreifen.

5. Transportmittel (2) nach Anspruch 4, **dadurch gekennzeichnet, dass** die Führungsvorsprünge als Federnasen (46) ausgebildet sind, um das Bodenelement (6) werkzeuglos in die Führungsausnehmungen oder -nuten (30) einsetzen oder aus diesen entfernen zu können.

6. Transportmittel (2) nach einem der Ansprüche 1 bis 5, **dadurch gekennzeichnet, dass** der Grundkörper (4) zumindest einen Anschlag aufweist, welcher die Bewegung des Bodenelements (6) in der angehobenen Position begrenzt.

7. Transportmittel (2) nach einem der Ansprüche 1 bis 6, **dadurch gekennzeichnet, dass** das Bodenelement (6) in eine Bewegungsrichtung, insbesondere in Richtung der angehobenen Position, federvorgespannt ist.

8. Transportmittel (2) nach einem der Ansprüche 1 bis 7, **dadurch gekennzeichnet, dass** das Transportmittel (2) auf einem baugleichen Transportmittel (2') stapelbar ist und Vorsprünge und / oder Vertiefungen am Bodenelement (6) aufweist, die bei einer Stapelung des Transportmittels (2) auf einem baugleichen Transportmittel (2') mit entsprechenden Vertiefungen und / oder Vorsprüngen an der Oberseite des baugleichen Transportmittels (2') formschlüssig zusammenwirken können.

9. Transport- oder Verteilersystem (100) für Güter (G), insbesondere für Brief- oder Paketsendungen, mit zumindest einem Förderband- oder Rollenfördererabschnitt (102) und einer seitlichen Abzweigung, insbesondere einer weiteren Förderstrecke oder einer Ablagestation, wobei im Bereich der seitlichen Abzweigung unmittelbar über dem Förderband- oder Rollenfördererabschnitt (102) ein Leitsystem (104) mit einem stationär angeordneten Führungsabschnitt (118, 120) vorgesehen ist, **dadurch gekennzeichnet, dass** der Führungsabschnitt (118, 120) zwei Führungsschienen (108) aufweist, um mit einem beweglich aufgenommenen Bodenelement (6) eines auf dem Förderband- oder Rollenfördererabschnitt (102) transportierten mehrteiligen Transportmittels, insbesondere eines Transportmittel (2) nach einem der Ansprüche 1 bis 5, zusammenwirken zu können, wobei der Führungsabschnitt (118, 120) zumindest einen zum Förderband- oder Rollenfördererabschnitt (102) angestellten ersten Abschnitt (118) aufweist, um während der Förderbewegung den Abstand des Bodenelements (6) des Transportmittels (2) relativ zum Förderband- oder Rollenfördererabschnitt (102) zu verändern.

10. Transport- oder Verteilersystem (100) nach Anspruch 9, **dadurch gekennzeichnet, dass** der Führungsabschnitt (118, 120) rampenförmig ausgebildet ist und den in Förderrichtung (P) nach oben angestellten ersten Abschnitt (118) und einen daran anschließenden sich parallel zum Förderband- oder Rollenfördererabschnitt (102) erstreckenden zweiten Abschnitt (120) aufweist.

11. Transport- oder Verteilersystem (100) nach Anspruch 10, **dadurch gekennzeichnet, dass** sich an den zweiten Abschnitt (120) ein in Förderrichtung (P) nach unten angestellter dritter Abschnitt anschließt.

12. Transport- oder Verteilersystem (100) nach einem der Ansprüche 9 bis 11, **dadurch gekennzeichnet, dass** der Führungsabschnitt (118, 120) eine rampenförmig ausgebildete untere Führungsschiene (114) aufweist, welche mit dem anzuhebenden Bodenelement (6) des Transportmittels (2) zusammenwirkt, und ferner ein weiterer Führungsabschnitt (116) vorgesehen ist, der parallel zum Förderband- oder Rollenfördererabschnitt (102) ausgebildet ist und ein Anheben eines nicht anzuhebenden Teil (4) des Transportmittels (2) verhindert.

13. Transport- oder Verteilersystem (100) nach einem der Ansprüche 9 bis 12, **dadurch gekennzeichnet, dass** der Förderband- oder Rollenfördererabschnitt (102) im Bereich der seitlichen Abzweigung tiefer, insbesondere um die Höhe des Transportmittels (2) tiefer, als die seitliche Abzweigung angeordnet ist.

## Claims

1. Transport means (2), in particular a flat container or tray, for receiving goods (G), in particular letter or parcel consignments, in order to be able to transport these goods (G) within the context of a transport or distribution system (100) by means of conveyor belts (106) and/or roller conveyors, comprising:
an in particular rectangular frame-like or trough-like main part (4), the lower face of which is used as a support surface (16) on a substrate, and
a base element (6) that is received in the main part (4) so as to be movable perpendicularly to the support surface (16), the upper face of which base element is used as a loading surface (12) for the goods (G) to be transported, and which base element can be moved between a lowered position in which the loading surface (12) is laterally delimited by the main part (4), and a raised position in which the loading surface (12) is not delimited by the main part (4), at least on one side,
**characterised in that**
at least one glide portion (42) provided on the base element (6) passes through at least one opening (28) correspondingly provided in the main part (4) so as to be able to cooperate with at least one guide portion (118, 120) that is arranged in a stationary manner in the transport or distribution system, in particular at least one ramp-like guide rail (114), and to make it possible for the base element (6) to be transferred from the lowered position into the raised position while the at least one glide portion (42) glides along the at least one guide portion (118, 120).

2. Transport means (2) according to claim 1, **characterised in that** the at least one glide portion (42) is formed as a projection (38) on at least one, in particular on two opposing, first, in particular long, lateral edges (36) of the base element (6), which projection passes through at least one opening (28) provided on the side of the main part (4) and projects laterally therefrom.

3. Transport means (2) according to claim 1, **characterised in that** the at least one glide portion is arranged on a lower face of the base element (6), and the main part (4) comprises at least one, in particular slot-like, recess on the lower face thereof, which recess extends over the entire length of the main part (4) and allows access to the at least one glide portion arranged on the lower face of the base in the conveying direction.

4. Transport means (2) according to any one of claims 1 to 3, **characterised in that** the base element (6) is guided vertically in the main part (4) by means of guide projections (46) that are formed on two opposing second, in particular short, lateral edges (44) of the base element (6) and engage in corresponding guide recesses or grooves (30) in the main part (4).

5. Transport means (2) according to claim 4, **characterised in that** the guide projections are formed as spring lugs (46) in order to be able to insert the base element (6) into the guide recesses or grooves (30) or to remove said base element therefrom without the use of tools.

6. Transport means (2) according to any one of claims 1 to 5, **characterised in that** the main part (4) comprises at least one stop that limits the movement of the base element (6) in the raised position.

7. Transport means (2) according to any one of claims 1 to 6, **characterised in that** the base element (6) is spring-preloaded in a movement direction, in particular in the direction of the raised position.

8. Transport means (2) according to any one of claims 1 to 7, **characterised in that** the transport means (2) can be stacked on an identically constructed transport means (2') and comprises projections and/or depressions on the base element (6) that can cooperate in an interlocking manner with corresponding depressions and/or projections on the upper face of the identically constructed transport means (2') when the transport means (2) is stacked on an identically constructed transport means (2').

9. Transport or distribution system (100) for goods (G), in particular for letter or parcel consignments, comprising at least one conveyor belt portion or roller conveyor portion (102) and a lateral fork, in particular a further conveying path or a delivery station, a guidance system (104) comprising a stationary guide portion (118, 120) being provided directly above the conveyor belt portion or roller conveyor portion (102) in the region of the lateral fork, **characterised in that** the guide portion (118, 120) comprises two guide rails (108) in order to be able to cooperate with a movably received base element (6) of a multiple-part transport means, in particular a transport means (2) according to any one of claims 1 to 5, that is transported on the conveyor belt portion or roller conveyor portion (102), the guide portion (118, 120) comprising at least one first portion (118) adjusted with respect to the conveyor belt portion or roller conveyor portion (102) in order to change the spacing of the base element (6) of the transport means (2) relative to the conveyor belt portion or roller conveyor portion (102) during the conveying movement.

10. Transport or distribution system (100) according to claim 9, **characterised in that** the guide portion (118, 120) is ramp-like and comprises the first portion (118) that is adjusted upwards in the conveying direction (P) and a second portion (120) that adjoins said first portion and extends in parallel with the conveyor belt portion or roller conveyor portion (102).

11. Transport or distribution system (100) according to claim 10, **characterised in that** a third portion that is adjusted downwards in the conveying direction (P) adjoins the second portion (120).

12. Transport or distribution system (100) according to any one of claims 9 to 11, **characterised in that** the guide portion (118, 120) comprises a ramp-like lower guide rail (114) that cooperates with the base element (6) of the transport means (2) to be raised, and a further guide portion (116) is in addition provided that is parallel to the conveyor belt portion or roller conveyor portion (102) and prevents raising of a part (4) of the transport means (2) that is not to be raised.

13. Transport or distribution system (100) according to any one of claims 9 to 12, **characterised in that**, in the region of the lateral fork, the conveyor belt portion or roller conveyor portion (102) is arranged lower, in particular lower by the height of the transport means (2), than the lateral fork.

## Revendications

1. Moyen de transport (2), en particulier un récipient plat ou une tablette, pour la réception de marchandises (G), en particulier de lettres ou de colis, afin de pouvoir transporter ces marchandises (G) dans le cadre d'un système de transport ou de distribution (100) au moyen de transporteurs à bande (106) et/ou de transporteurs à rouleaux, avec :
un corps de base (4), en particulier rectangulaire en forme de cadre ou de cuvette, dont la face inférieure sert de surface de pose (16) sur un support, et
un élément de plancher (6) reçu de manière mobile dans le corps de base (4) perpendiculairement à la surface de pose (16), dont la face supérieure sert de surface de chargement (12) pour les marchandises à transporter (G) et qui peut être déplacé entre une position abaissée, dans laquelle la surface de chargement (12) est délimitée latéralement par le corps de base (4), et une position soulevée, dans laquelle la surface de chargement (12) n'est pas délimitée par le corps de base (4) du moins vers un côté,
**caractérisé en ce que**
au moins une section de glissement (42) prévue au niveau de l'élément de plancher (6) traverse au moins un passage (28) prévu en conséquence dans le corps de base (4) afin de pouvoir coopérer avec au moins une section de guidage (118, 120) agencée de manière stationnaire dans le système de transport ou de distribution, en particulier au moins un rail de guidage (114) en forme de rampe et de permettre un transfert de l'élément de plancher (6) de la position abaissée à la position soulevée pendant le glissement de l'au moins une section de glissement (42) le long de l'au moins une section de guidage (118, 120).

2. Moyen de transport (2) selon la revendication 1, **caractérisé en ce que** l'au moins une section de glissement (42) est réalisée au niveau d'au moins un, en particulier deux opposés, premier bord latéral (36), en particulier long, de l'élément de plancher (6) sous forme de saillie (38), laquelle traverse au moins un passage (28) prévu latéralement dans le corps de base (4) et fait latéralement saillie de celui-ci.

3. Moyen de transport (2) selon la revendication 1, **caractérisé en ce que** l'au moins une section de glissement est agencée au niveau d'une face inférieure de l'élément de plancher (6) et le corps de base (4) présente au niveau de la face inférieure au moins un évidement, en particulier en forme de fente, s'étendant sur toute la longueur du corps de base (4), lequel permet dans le sens de transport d'accéder à l'au moins une section de glissement agencée au niveau de la face inférieure du plancher.

4. Moyen de transport (2) selon l'une quelconque des revendications 1 à 3, **caractérisé en ce que** l'élément de plancher (6) est guidé verticalement dans le corps de base (4) par le biais de saillies de guidage (46), lesquelles sont réalisées au niveau de deux deuxièmes bords latéraux (44) opposés, en particulier courts, de l'élément de base (6) et viennent en prise dans des évidements ou rainures de guidage (30) correspondants dans le corps de base (4).

5. Moyen de transport (2) selon la revendication 4, **caractérisé en ce que** les saillies de guidage sont réalisées sous forme de languettes ressort (46) afin de pouvoir insérer l'élément de plancher (6) sans outil dans les évidements ou rainures de guidage (30) ou le retirer de ces derniers.

6. Moyen de transport (2) selon l'une quelconque des revendications 1 à 5, **caractérisé en ce que** le corps de base (4) présente au moins une butée, laquelle limite le mouvement de l'élément de plancher (6) dans la position soulevée.

7. Moyen de transport (2) selon l'une quelconque des revendications 1 à 6, **caractérisé en ce que** l'élément de plancher (6) est précontraint par ressort dans une direction de déplacement, en particulier en direction de la position soulevée.

8. Moyen de transport (2) selon l'une quelconque des revendications 1 à 7, **caractérisé en ce que** le moyen de transport (2) est empilable sur un moyen de transport (2') de même construction et présente des saillies et/ou creux au niveau de l'élément de plancher (6), qui peuvent coopérer par correspondance de forme avec des creux et/ou saillies correspondants au niveau de la face supérieure du moyen de transport (2') de même construction lors de l'empilage du moyen de transport (2) sur un moyen de transport (2') de même construction.

9. Système de transport ou de distribution (100) pour marchandises (G), en particulier pour lettres ou colis, avec au moins une section de transporteur à bande ou à rouleaux (102) et une bifurcation latérale, en particulier un autre tronçon de transport ou une station de dépose,
dans lequel
un système de guidage (104) avec une section de guidage (118, 120) agencée de manière stationnaire est prévu dans la zone de la bifurcation latérale immédiatement au-dessus de la section de transporteur à bande ou à rouleaux (102), **caractérisé en ce que** la section de guidage (118, 120) présente deux rails de guidage (108) pour pouvoir coopérer avec un élément de plancher (6) reçu de manière mobile d'un moyen de transport à plusieurs parties transporté sur la section de transporteur à bande ou à rouleaux (102), en particulier d'un moyen de transport (2) selon l'une quelconque des revendications 1 à 5, dans lequel la section de guidage (118, 120) présente au moins une première section (118) posée par rapport à la section de transporteur à bande ou à rouleaux (102) pour modifier la distance de l'élément de plancher (6) du moyen de transport (2) par rapport à la section de transporteur à bande ou à rouleaux (102) pendant le mouvement de transport.

10. Système de transport ou de distribution (100) selon la revendication 9, **caractérisé en ce que** la section de guidage (118, 120) est réalisée en forme de rampe et présente la première section (118) posée vers le haut dans le sens de transport (P) et une deuxième section (120) s'y raccordant, s'étendant parallèlement à la section de transporteur à bande ou à rouleaux (102).

11. Système de transport ou de distribution (100) selon la revendication 10, **caractérisé en ce qu'**une troisième section posée vers le bas dans le sens de transport (P) se raccorde à la deuxième section (120).

12. Système de transport ou de distribution (100) selon l'une quelconque des revendications 9 à 11, **caractérisé en ce que** la section de guidage (118, 120) présente un rail de guidage inférieur (114) réalisé en forme de rampe, lequel coopère avec l'élément de plancher (6) à soulever du moyen de transport (2), et une autre section de guidage (116) est prévue en outre, qui est réalisée parallèlement à la section de transporteur à bande ou à rouleaux (102) et empêche un soulèvement d'une partie (4) à pas soulever du moyen de transport (2).

13. Système de transport ou de distribution (100) selon l'une quelconque des revendications 9 à 12, **caractérisé en ce que** la section de transporteur à bande ou à rouleaux (102) est agencée plus bas dans la zone de la bifurcation latérale, en particulier plus bas de la hauteur du moyen de transport (2), que la bifurcation latérale.
